# EUROPÄISCHE PATENTSCHRIFT

(11) **EP 1 607 771 B1**
(45) Veröffentlichungstag und Bekanntmachung des Hinweises auf die Patenterteilung: **29.06.2011**
(21) Anmeldenummer: 05103210.0
(22) Anmeldetag: 21.04.2005
(51) Int. Cl.: G02B 5/00, G02B 23/12, G03B 9/02

(54) **Nachtsichtsystem für Kraftfahrzeuge**
Night vision system for motor vehicles
Système de vision nocturne pour véhicules à moteur

(30) Priorität: 12.06.2004 DE 102004028616
(43) Veröffentlichungstag der Anmeldung: 21.12.2005
(73) Patentinhaber: ROBERT BOSCH GMBH, 70442 Stuttgart (DE)
(72) Erfinder: Apel, Uwe, 72666, Neckartailfingen (DE); Schick, Jens, 71083, Herrenberg (DE); Fritz, Steffen, 75449, Wurmberg (DE)

(56) Entgegenhaltungen:
- EP-A- 1 465 002
- CH-A5- 694 174
- DE-A1- 2 153 198
- DE-A1- 2 638 276
- DE-A1- 3 226 807
- DE-A1- 3 313 899
- DE-A1- 4 032 927
- US-A- 4 376 889
- US-A- 5 212 589

## Beschreibung

### Stand der Technik

Die Erfindung betrifft ein Nachtsichtsystem für Kraftfahrzeuge.

Aus der deutschen Offenlegungsschrift DE 40 32 927 A1 ist eine Vorrichtung zur Verbesserung der Sichtverhältnisse in einem Kraftfahrzeug bekannt. Es wird vorgeschlagen, das Bild einer Infrarotempfindlichen Kamera durch eine Anzeigevorrichtung als virtuelles Bild dem Bild der äußeren Landschaft visuell zu überlagern und dem Fahrer des Kraftfahrzeuges anzuzeigen.

Die deutsche Offenlegungsschrift DE 32 26 807 A1 offenbart ein Kameraobjektiv mit einer Blende. Es wird vorgeschlagen, einen Graufilter in den Aufnahmestrahlengang einzubringen, um die Konturschärfe des aufgenommenen Bildes zu erhöhen. Hinweise auf ein Kameraobjektiv, das für unterschiedlichste Belichtungsverhältnisse, insbesondere bei Tag und bei Nacht, geeignet ist, fehlen in der DE 32 26 807 A1.

Die US-A-5 212 589 zeigt ein Linsensystem mit diskreten Variationen der Brennweite bei diskreten Abständen eines Radius außerhalb der optischen Achse. Hierbei wird Licht unterschiedlicher Wellenlänge durch unterschiedliche Linsenelemente gebündelt, wobei ein inneres Linsenelement in der Mitte ein Durchgangsloch aufweist. An einer Filterplatte ist eine dielektrische Beschichtung vorgesehen, die selektiv nur für Licht kurzer Wellenlänge wirksam ist.

Die DE 2 153 198 A1 beschreibt eine Aperturblende für optische Systeme, die mehrere konzentrische Farbfilterringe aufweist. So kann z. B. ein für die volle Apertur wirksamer Farbfilterring für Rot durchlässig sein und für Blau und Grün als Blende wirken. Durch entsprechende Auswahl der Farbfilterringe kann der Blendendurchmesser z. B. für Blau klein, für Grün mittel und für Rot groß sein.

Die US-A4 376 889 beschreibt ein Nachtsichtgerat mit einer Bildverstärkerröhre, wobei vor einer Objektivlinse eine Filteranordnung vorgesehen ist, die ein wellenlängenselektives Filter aufweist. Hierbei ist im Filter ein mittiges Loch ausgebildet, so dass die Filteranordnung als wellenlängenselektive Apertur dient, deren mittlerer Bereich sämtliche Wellenlängen durchlässt und deren äußerer Bereich wellenlängenselektiv wirkt.

### Vorteile der Erfindung

Das nachfolgend beschriebene Nachtsichtsystem mit den Merkmalen des unabhängigen Patentanspruchs 1 hat den Vorteil, dass es bei unterschiedlichsten Belichtungsverhältnissen und/oder Tageszeiten eingesetzt werden kann. Durch geeignete Auslegung der radialabhängigen, spektralen Transmissivität des verwendeten Filters, wird eine maximale Tiefenschärfe bei den unterschiedlichen Belichtungsverhältnissen erreicht. Insbesondere wird eine maximale Tiefenschärfe sowohl bei starkem Tageslicht, als auch bei schwachem Licht im nahe Infraroten Spektrum, erhalten. Hierzu wird das Filter derart ausgelegt, dass die Blendenzahl k(λ) für sichtbares Licht groß ist (kleine Aperturblende), während die Blendenzahl k(λ) für Licht im nahen infraroten Spektralbereich klein ist (große Aperturblende) und beide Blendenzahlen in einem Objektiv vereint sind.

Besonders vorteilhaft ist, dass die Einstellung der wellenlängenabhängigen Blendenzahl k(λ) durch Überlagerung von zwei oder mehr als zwei Filtern erfolgt, deren radial abhängige, spektrale Transmissivität T(r, λ) unterschiedlich ist. Durch Überlagerung von mehreren Filtern mit feinen Abstufungen ist ein kontinuierlicher Übergang der Blendenzahl k(λ) erreichbar.

Vorteilhaft ist, dass als Filter Interferenzfilter und/oder Absorptionsfilter und/oder Polarisationsfilter verwendet werden, wobei Absorptionsfilter hierfür besonders geeignet sind.

Besonders vorteilhaft ist, dass die Blende in einer Hauptebene des Kameraobjektivs angeordnet ist, da dies zu einer hohen Tiefenschärfe des Bildes beiträgt.

Ferner weist das Kameraobjektiv wenigstens eine Linse auf, wobei die Blende in die Linse integriert ist, da hierdurch eine kompakte Bauweise des Kameraobjektivs erreicht wird.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsformen näher erläutert.

Es zeigen
- Figur 1: eine Kamera,
- Figur 2: eine Blende,
- Figur 3: den Verlauf der spektralen Transmissivität T_{S} (r, λ) für Licht im sichtbaren Spektralbereich,
- Figur 4: den Verlauf der spektralen Transmissivität T_{IR} (r, λ) für Licht im nahen infraroten Spektralbereich,
- Figur 5: den Verlauf der spektralen Transmissivität T_{F} (λ) in Abhängigkeit der Wellenlänge λ.

### Beschreibung von Ausführungsbeispielen

Nachfolgend werden ein Kameraobjektiv und eine Kamera mit einem derartigen Kameraobjektiv beschrieben. Die Blendenzahl k(λ) des Kameraobjektivs ist wellenlängenabhängig. Diese wellenlängenabhängige Blendenzahl k(λ) wird durch den radialen und spektralen Verlauf der Transmissivität T(r, λ) wenigstens eines Filters in der Blende eingestellt. Ferner wird eine Vorrichtung zur Verbesserung der Sicht in einem Kraftfahrzeug mit einer solchen Kamera vorgeschlagen, wobei die Kamera für Tagsicht-und Nachtsichtanwendungen ausgelegt ist. Insbesondere ist die Vorrichtung ein Nachtsichtsystem für Kraftfahrzeuge.

Im bevorzugten Ausführungsbeispiel wird ein Nachtsichtsystem für Kraftfahrzeuge beschrieben, wobei das Nachtsichtsystem eine Kamera mit einem Kameraobjektiv umfasst. Hierzu wird der Bereich vor dem Kraftfahrzeug mit Fernlicht im nahen infraroten Spektralbereich (NIR) ausgeleuchtet und das reflektierte Licht mit einer im nahen infraroten empfindlichen Kamera (NIR-Kamera) aufgenommen. Gleichzeitig wird die Kamera dazu verwendet, um vorhandenes, sichtbares Licht auszuwerten. Für Nachtsituationen besteht die Anforderung, dass die Blende weit geöffnet ist, damit die Reichweite optimiert, also hoch ist. Im Gegensatz hierzu sollte die Blende für Tagsituationen weiter geschlossen sein, damit der bildgebende Bildsensor nicht überfordert wird und eine maximale Tiefenschärfe erreicht wird.

Im bevorzugten Ausführungsbeispiel wird dazu eine Filterschicht mit in die Blendenebene des Kameraobjektivs eingeführt, die als Funktion des Radius von der optischen Achse beginnend eine sich verändernde spektrale Transmissivität hat. Durch geeignete Auslegung wird das sichtbare Licht durch ein kleines Blendenloch und das NIR-Licht durch ein größeres Blendenloch begrenzt. Nachts erreicht im Verhältnis zum sichtbaren Licht mehr NIR-Strahlung den Bildsensor, wobei die Verzeichnungen durch die NIR-Strahlung unerheblich sind. Da die Abbildungen von sichtbaren Objekten und von NIR-sichtbaren Objekten unterschiedlich sind, ist das Kameraobjektiv und/oder die Kamera für Tag- und für Nachtanwendungen unterschiedlich kalibriert, d.h. die Kalibrierung der Kamera und/oder des Kameraobjektivs erfolgt zumindest in Abhängigkeit der wellenlängenabhängigen Blendenzahl k(λ). Durch die Einführung einer Filterschicht mit einer über den Radius spektral abhängigen Transmissivität in eine Blendenebene wird erreicht, dass die Blendenzahl k(λ) abhängig von dem Lichtspektrum des einfallenden Lichtes ist. In einer Variante des bevorzugten Ausführungsbeispiels wird ferner vorgeschlagen, die Transmissivität sprungförmig durch die Überlagerung verschiedener Filterschichten auszulegen. Als Filterschichten können alle Arten von Filtern eingesetzt werden, insbesondere Interferenzfilter und/oder Absorptionsfilter und/oder Polarisationsfilter.

Das sichtbare Spektrum liegt im Wellenlängenbereich zwischen 380 nm und 780 nm. Infrarotstrahlung mit Wellenlängen größer als 780 nm, insbesondere NIR IR-A im Wellenlängenbereich zwischen 780 nm bis 1400 nm und NIR IR-B im Wellenlängenbereich zwischen 1400 nm bis 3000 nm.

Die Blendenzahl k(λ) ist definiert als das Verhältnis der Brennweite F des Objektivs zum Durchmesser d der Eintrittspupille der Blende. Im Folgenden wird vorgeschlagen, die wellenlängenabhängige Blendenzahl k(λ) mittels eines in die Blende eingefügten Filters dadurch einzustellen, dass der Durchmesser der Eintrittspupille d der Blende wellenlängenabhängig ist, während die Brennweite annähernd konstant bleibt.

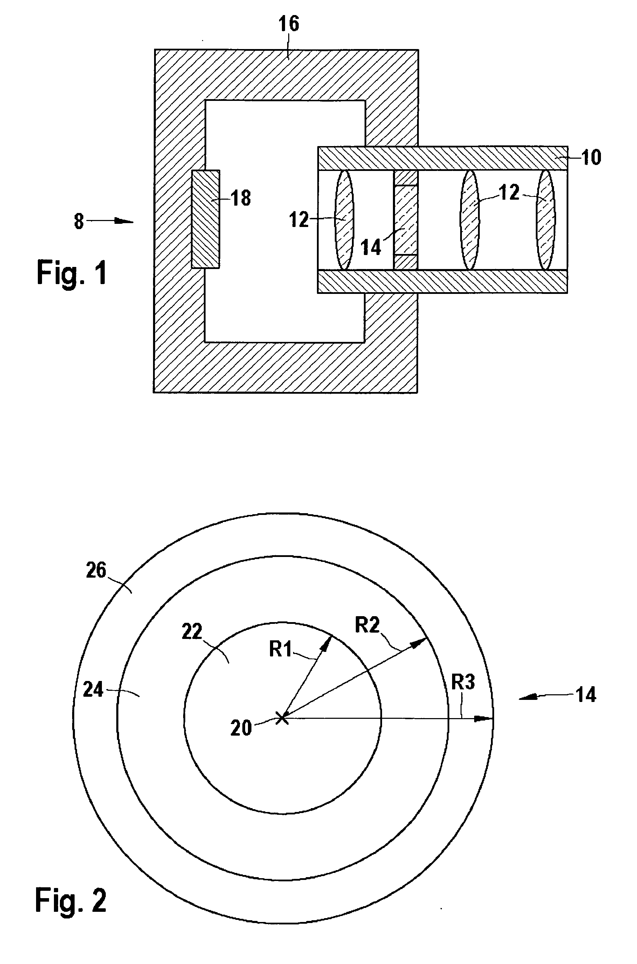

Figur 1 zeigt eine Kamera 8 des bevorzugten Ausführungsbeispiels, bestehend aus einem Kameraobjektiv 10 und einem Bildsensor 18. Erfindungsgemäß ist die Kamera 8 Bestandteil eines Nachtsichtsystems eines Kraftfahrzeuges, wobei das Nachtsichtsystem ferner eine Anzeigevorrichtung zur Darstellung von Bildinformationen im Blickfeld des Kraftfahrzeuges aufweist, wobei die Bildinformationen von der Kamera 8 erzeugt werden. Ferner weist das Nachtsichtsystem im bevorzugten Ausführungsbeispiel Scheinwerfer auf, die Licht im nahen infraroten Spektralbereich aussenden. Die Kamera 8 ist hinter der Windschutzscheibe eines Kraftfahrzeuges in Fahrtrichtung und/oder entgegen der Fahrtrichtung als Rückfahrkamera installiert. Das Kameraobjektiv 10 besteht aus drei Linsen 12, die ein Linsensystem bilden. Als Linsen 12 werden konkave und/oder konvexe und/oder konkav-konvexe Linsen 12 verwendet. In weiteren Varianten des bevorzugten Ausführungsbeispiels besteht das Objektiv 10 aus mehr oder auch weniger als drei Linsen 12, insbesondere besteht das Objektiv 10 aus fünf oder zehn Linsen 12. Ferner umfasst das Kameraobjektiv 10 eine im Strahlengang angeordnete konzentrische Blende 14, die in Figur 2 näher erläutert ist. Die Blende 14 ist in der Hauptebene des Kameraobjektives 10 angeordnet. Das Kameraobjektiv 10 bildet zusammen mit dem Bildsensor 18 das Abbildungssystem. Im bevorzugten Ausführungsbeispiel ist der Bildsensor 18 ein CMOS-Bildsensor, wobei alternativ oder zusätzlich CCD-Sensoren einsetzbar sind. Ferner umfasst die Kamera 8 das Gehäuse 16, welches das Kameraobjektiv 10 und den Bildsensor 18 aufnimmt.

Figur 2 zeigt eine Vorderansicht der Blende 14 des bevorzugten Ausführungsbeispiels. Erfindungsgemäß besteht die Blende 14 aus einem äußeren Bereich 26, der lichtundurchlässig ist. Als Materialien des äußeren Bereiches 26 sind Metalle und/oder Kunststoffe geeignet. Die beiden inneren Bereiche, nachfolgend als erster Bereich 22 und zweiter Bereich 24 bezeichnet, bestehen aus einem lichtdurchlässigen Material, beispielsweise Glas. Während der erste Bereich 22, also der innerste konzentrisch um die optische Achse 20 angeordnete Kreis keinen Filter aufweist, ist der zweite Bereich 24, der als konzentrisch um die optische Achse 20 angeordneter Ring ausgeführt ist, mit einer Filterschicht versehen. Als Filter wird im bevorzugten Ausführungsbeispiel ein Absorptionsfilter verwendet. In einer weiteren Variante werden alternativ oder zusätzlich Interferenzfilter und/oder Polarisationsfilter eingesetzt. Der erste Bereich 22 weist einen Radius von R1 auf, während der zweite Bereich 24 sich zwischen dem Radius R1 und dem Radius R2 erstreckt. Die Blende 14 hat insgesamt einen Radius von R3.

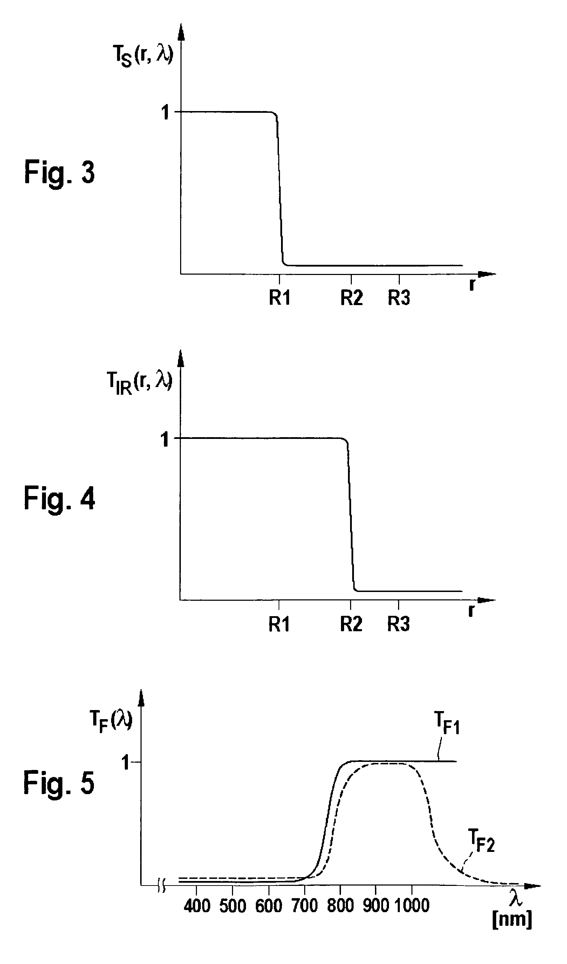

Figur 3 zeigt den Verlauf der spektralen Transmissivität T_{S} (r, λ) von sichtbarem (s) Licht mit Wellenlängen zwischen 380nm und 780nm in Abhängigkeit vom Radius r der Blende 14. Auf der Abszisse ist der Radius r mit den Radien R1, R2 und R3 dargestellt, während auf der Ordinate die spektrale Transmissivität T_{S} (r, λ) aufgetragen ist. Aus dem Diagramm in Figur 3 wird deutlich, dass Licht im sichtbaren Spektralbereich, also im Wellenlängenbereich zwischen 380 nm und 780 nm, eine Eintrittspupille R1 der Blende vorfindet. Im bevorzugten Ausführungsbeispiel weist die Transmissivität T_{S} (r, λ) beim Radius R1 einen Sprungförmigen Verlauf auf.

Figur 4 zeigt den Verlauf der spektralen Transmissivität T_{IR} (r, λ) für Licht im nahen infraroten Spektralbereich der Blende des bevorzugten Ausführungsbeispiels. Die Bezeichnungen der Abszisse und der Ordinate entsprechen denen von Figur 3. Aus Figur 4 wird deutlich, dass die Eintrittspupille der Blende für Licht im nahen Infrarotbereich einen Radius von R2 aufweist, wobei R2 größer ist, als R1. Daraus ergibt sich, dass die Blendenzahl k(λ) für Licht im nahen infraroten Spektralbereich kleiner ist, als für Licht im sichtbaren Spektralbereich.

Figur 5 zeigt den Verlauf der spektralen Transmissivität T_{F} (λ) des Filters im bevorzugten Ausführungsbeispiel. Das Diagramm zeigt auf der Abszisse die Wellenlänge λ in nm, während auf der Ordinate die spektrale Transmissivität T_{F} (λ) aufgetragen ist. Im bevorzugten Ausführungsbeispiel weist die spektrale Transmissivität T_{F1} Hochpasscharakteristik auf. Bei Wellenlängen kleiner als etwa 700 nm ist die spektrale Transmissivität T_{F1} annähernd Null, d.h., Licht im sichtbaren Spektralbereich wird nahezu vollständig ausgeblendet. In einer Variante des bevorzugten Ausführungsbeispiels weist die spektrale Transmissivität T_{F2} eine bandpassförmige Charakteristik auf, wobei Wellenlängen im nahen infraroten Spektralbereich durchgelassen werden.

In einer weiteren Variante des bevorzugten Ausführungsbeispiels ist die Blendenzahl k(λ) der Blende und/oder des Kameraobjektivs zumindest in einem Teil des ultravioletten Spektrums und/oder in einem Teil des sichtbaren Spektrums und/oder in einem Teil des infraroten Spektrums von der Wellenlänge abhängig. Alternativ oder Zusätzlich weist das verwendete Filter Hochpasscharakteristik und/oder Tiefpasscharakteristik und/oder Bandpasscharakteristik auf.

In einer weiteren Variante des bevorzugten Ausführungsbeispiels ist die Blende außerhalb der Hauptebene des Kameraobjektives angeordnet. Vorzugsweise wird diese Anordnung bei einem telezentrischen Kameraobjektiv verwendet.

Erfindungsgemäß ist die Blende mit dem Filter in der wenigstens einen Linse des Kameraobjektives integriert. Das Filter, insbesondere das Absorptionsfilter, ist als Beschichtung auf die Linse aufgebracht.

Ferner werden in einer weiteren Variante des bevorzugten Ausführungsbeispiels zwei oder mehr als zwei Filter überlagert, deren radial abhängige spektrale Transmissivität T(r, λ) unterschiedlich ist. Die Filter werden als konzentrisch um die optische Achse angeordnete Ringe gebildet, die unterschiedliche Innen- und/oder Außendurchmesser aufweisen.

## Patentansprüche

1. Nachtsichtsystem für Kraftfahrzeuge, umfassend eine Kamera (8) zur Auswertung von Licht im nahen infraroten Spektralbereich und im sichtbaren Bereich,
wobei die Kamera (8) ein Kameraobjektiv (10) und einen Bildsensor (18) aufweist,
wobei das Kameraobjektiv (10) wenigstens eine Blende (14) umfasst, die wenigstens ein optisches Filter aufweist,
wobei das optische Filter derart ausgelegt ist, dass der Durchmesser der Eintrittspupille der Blende (14) des Kameraobjektivs (10) wellenlängenabhängig ist und die Brennweite annähernd konstant ist,
wobei das Kameraobjektiv (10) wenigstens eine Linse (12) aufweist,
wobei die Blende (14) in die mindestens eine Linse (12) integriert ist,
wobei die Blende (14) konzentrisch ausgebildet ist mit einem lichtdurchlässigen inneren Bereich (22), einem dazu konzentrischen, für sichtbares Licht nahezu undurchlässigen, mittleren Bereich (24) mit einer Filterschicht, und einem lichtundurchlässigen äußeren Bereich (26),
derartig, dass
- sichtbares Licht durch ein kleines Blendenloch und Licht im nahen infraroten Bereich durch ein größeres Blendenloch begrenzt ist.

2. Nachtsichtsystem nach Anspruch 1, **dadurch gekennzeichnet, dass** der Durchmesser der Eintrittspupille der Blende durch eine spektrale Transmissivität T(r,λ) des Filters eingestellt ist, wobei die spektrale Transmissivität T(r,λ) in radialer Richtung der Blende unterschiedlich ist.

3. Nachtsichtsystem nach einem der vorhergehenden Ansprüche, **dadurch gekennzeichnet, dass** die spektrale Transmissivität T(r,λ) des Filters eine Hochpasscharakteristik und/oder eine Tiefpasscharakteristik und/oder eine Bandpasscharakteristik aufweist.

4. Nachtsichtsystem nach einem der vorhergehenden Ansprüche, **dadurch gekennzeichnet, dass** die Einstellung des wellenlängenabhängigen Durchmessers der Eintrittpupille der Blende durch Überlagerung von zwei oder mehr als zwei Filtern erfolgt, deren radialabhängige, spektrale Transmissivität T(r,λ) unterschiedlich ist.

5. Nachtsichtsystem nach einem der vorhergehenden Ansprüche, **dadurch gekennzeichnet, dass** das Filter ein Interferenzfifter und/oder ein Absorptionsfilter und/oder ein Polarisationsfifter ist.

6. Nachtsichtsystem nach einem der vorhergehenden Ansprüche, **dadurch gekennzeichnet, dass** die Blende in einer Hauptebene des Kameraobjektivs angeordnet ist.

7. Nachtsichtsystem nach einem der vorhergehenden Ansprüche, **dadurch gekennzeichnet, dass** der Bildsensor (18) ein CMOS-Bildsensor (18) ist.

8. Nachtsichtsystem nach einem der vorhergehenden Ansprüche, **gekennzeichnet durch** eine Anzeigevorrichtung zur Darstellung von Bildinformationen im Blickfeld des Fahrers des Kraftfahrzeuges, wobei die Bildinformationen von der Kamera erzeugt werden.

## Claims

1. Night vision system for motor vehicles, comprising a camera (8) for evaluating light in the near infrared spectral region and in the visible region,
in which the camera (8) has a camera objective (10) and an image sensor (18),
in which the camera objective (10) comprises at least one diaphragm (14) that has at least one optical filter,
in which the optical filter is designed in such a way that the diameter of the entrance pupil of the diaphragm (14) of the camera objective (10) is dependent on wavelength, and the focal length is approximately constant,
in which the camera objective (10) has at least one lens (12),
in which the diaphragm (14) is integrated into the at least one lens (12), and
in which the diaphragm (14) is designed concentrically with a transparent inner region (22), a middle region (24) which is concentric therewith, virtually opaque to visible light, and has a filter layer, and an opaque outer region (26), the effect being that
- visible light is limited by a small diaphragm aperture, and light in the near infrared region is limited by a larger diaphragm aperture.

2. Night vision system according to Claim 1, **characterized in that** the diameter of the entrance pupil of the diaphragm is set by a spectral transmissivity T(r,λ) of the filter, the spectral transmissivity T(r,λ) in the radial direction of the diaphragm being different.

3. Night vision system according to one of the preceding claims, **characterized in that** the spectral transmissivity T(r,λ) of the filter has a high-pass characteristic and/or a low-pass characteristic and/or a bandpass characteristic.

4. Night vision system according to one of the preceding claims, **characterized in that** the setting of the wavelength-dependent diameter of the entrance pupil of the diaphragm is performed by superimposing two or more than two filters whose radially dependent, spectral transmissivity T(r,λ) is different.

5. Night vision system according to one of the preceding claims, **characterized in that** the filter is an interference filter and/or an absorption filter and/or a polarization filter.

6. Night vision system according to one of the preceding claims, **characterized in that** the diaphragm is arranged in a principle plane of the camera objective.

7. Night vision system according to one of the preceding claims, **characterized in that** the image sensor (18) is a CMOS image sensor (18).

8. Night vision system according to one of the preceding claims, **characterized by** a display device for displaying image information in the field of view of the driver of the motor vehicle, the image information being produced by the camera.

## Revendications

1. Système de vision nocturne pour véhicules automobiles, comprenant une caméra (8) qui évalue la lumière dans la plage spectrale de l'infrarouge proche et dans la plage visible,
la caméra (8) présentant un objectif (10) de caméra et un détecteur d'image (18),
l'objectif (10) de la caméra comprenant au moins un diaphragme (14) qui présente au moins un filtre optique,
le filtre optique étant conçu de manière à ce que le diamètre de la pupille d'entrée du diaphragme (14) de l'objectif (10) de la caméra dépende de la longueur d'onde et que la distance focale soit approximativement constante,
l'objectif (10) de la caméra présentant au moins une lentille (12),
le diaphragme (14) étant intégré dans la ou les lentilles (12),
le diaphragme (14) étant configuré concentriquement avec une partie intérieure (22) transparente vis-à-vis de la lumière, une partie centrale (24) dotée d'une couche de filtre, concentrique à la partie intérieure et presque opaque pour la lumière visible ainsi qu'une partie extérieure (26) opaque vis-à-vis de la lumière, de telle sorte que
la lumière visible soit limitée par un petit trou du diaphragme et que la lumière dans la plage de l'infrarouge proche soit limitée par un plus grand trou du diaphragme.

2. Système de vision nocturne selon la revendication 1, **caractérisé en ce que** le diamètre de la pupille d'entrée du diaphragme est défini par la transmittance spectrale T(r, λ) du filtre, la transmittance spectrale T(r, λ) variant dans la direction radiale du diaphragme.

3. Système de vision nocturne selon l'une des revendications précédentes, **caractérisé en ce que** la transmittance spectrale T(r, λ) du filtre présente une caractéristique passe-haut et/ou une caractéristique passe-bas et/ou une caractéristique de bande passante.

4. Système de vision nocturne selon l'une des revendications précédentes, **caractérisé en ce que** l'établissement du diamètre en fonction de la longueur d'onde de la pupille d'entrée du diaphragme s'effectue par superposition de deux ou de plus de deux filtres dont les transmittances spectrales T(r, λ), qui dépendent du rayon, sont différentes.

5. Système de vision nocturne selon l'une des revendications précédentes, **caractérisé en ce que** le filtre est un filtre à interférence et/ou un filtre à absorption et/ou un filtre polarisant.

6. Système de vision nocturne selon l'une des revendications précédentes, **caractérisé en ce que** le diaphragme est disposé dans un plan principal de l'objectif de la caméra.

7. Système de vision nocturne selon l'une des revendications précédentes, **caractérisé en ce que** le détecteur d'image (18) est un détecteur d'image (18) CMOS.

8. Système de vision nocturne selon l'une des revendications précédentes, **caractérisé par** un dispositif d'affichage qui représente des informations d'image dans le champ de vision du conducteur du véhicule automobile, les informations d'image étant produites par la caméra.
